(19) Europäisches Patentamt
European Patent Office
Office européen des brevets

(11) **EP 2 350 439 B1**

(12) **EUROPEAN PATENT SPECIFICATION**

(45) Date of publication and mention
of the grant of the patent:
**26.08.2015 Bulletin 2015/35**

(21) Application number: **09756146.8**

(22) Date of filing: **18.11.2009**

(51) Int Cl.:
*F04D 29/32* (2006.01)      *F04D 27/00* (2006.01)
*F03D 1/06* (2006.01)       *F01D 9/04* (2006.01)
*F01D 5/14* (2006.01)       *B64C 3/14* (2006.01)

(86) International application number:
**PCT/EP2009/008216**

(87) International publication number:
**WO 2010/057627 (27.05.2010 Gazette 2010/21)**

(54) **Method for optimising the shape of an aerofoil and corresponding aerofoil**

Verfahren zur Optimierung der Form eines Schaufelprofils und zugehöriges Schaufelprofil

Procédé pour l'optimisation de la forme d'un profil d' aube et profil d' aube associé

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.11.2008 GB 0821429**

(43) Date of publication of application:
**03.08.2011 Bulletin 2011/31**

(73) Proprietor: **Rolls-Royce plc
London SW1E 6AT (GB)**

(72) Inventors:
• **LUNG, Hang Wai
Derby, DE24 8BJ (GB)**
• **GOODHAND, Martin Neil
Derby, DE24 8BJ (GB)**
• **MILLER, Robert John
Derby, DE24 8BJ (GB)**
• **HOWARD, Michael Arthur
Derby, DE24 8BJ (GB)**

(74) Representative: **Rolls-Royce plc
Intellectual Property Dept SinA-48
PO Box 31
Derby DE24 8BJ (GB)**

(56) References cited:
**EP-A2- 0 704 602      US-A1- 2003 194 327**

## Description

This invention relates to aerofoil design, and more particularly to methods for optimising the shape of leading and trailing edges of aerofoils.

Known methods for designing entire aerofoils include those disclosed in US2003/0194327A1 and EP704602A2.

In this specification, for conciseness and clarity, the invention and the background to it will be described principally with reference to the leading edges of aerofoils (and, specifically, to the leading edge of a compressor aerofoil in a gas turbine engine). As will be explained, however, the principles of the invention are applicable equally to the trailing edge as to the leading edge. Furthermore, the principles of the invention may equally well be applied to other types of aerofoils, or to hydrofoils, and will deliver substantially the same benefits and advantages as in the specific embodiment described. It should be understood, therefore, that references in the following description to terms such as "aerofoil" and "leading edge" are not intended to limit the scope of the invention.

The leading edge of a turbomachinery aerofoil is known to have a significant effect on the loss, efficiency and operating range of the aerofoil.

Many approaches to leading edge design have been tried in the past, including circular, closed curve fit, elliptical, free-form and component centre line.

All of these leading edge designs have certain characteristic disadvantages. For example: circular are robust but inflexible, and cause losses due to high curvature changes; closed curve fit tends to remove too much material and 'snub' the leading edge; elliptical are more difficult to implement, and lack subtle control and flexibility; free-form are difficult to control and systemise; component centre line with tangential fit rely on symmetrical profiles based on circles.

Where there are large changes in surface curvature on an aerofoil, as tends to occur near to the leading edge, small local overspeeds (sometimes called spikes) occur in use in the surface pressure distribution. Such leading edge spikes can affect blade loss if they initiate premature boundary layer transition. Large spikes will result in separated flow transition while smaller spikes may result in attached flow transition. If early transition is initiated the profile loss will rise due to an increase in turbulent wetted area and an additional mixing loss associated with the separation bubble, should one exist. Thus for a leading edge to be considered "good", the spike must be absent, or at least small enough to prevent transition.

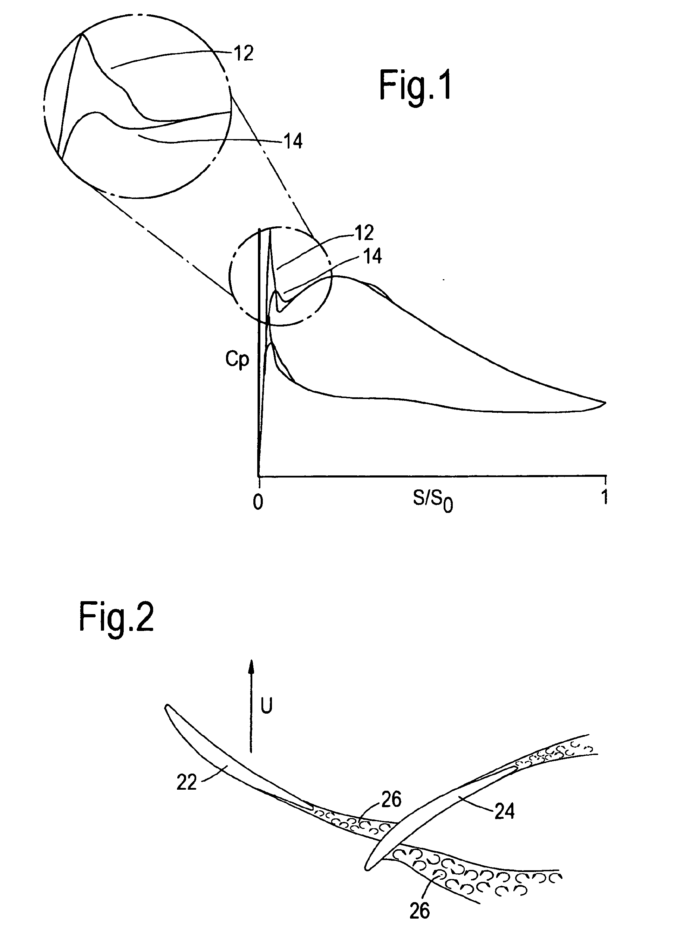

Figure 1 is a graph of surface pressure coefficient $c_p$ against fraction of suction surface length $s/s_0$, showing a comparison between the spikes produced in use by two known designs of leading edge. Considering the upper pair of curves, these show the spike 12 produced by a circular leading edge and the spike 14 produced by an elliptical leading edge. It will be observed that although the elliptical leading edge produces a smaller spike than the circular leading edge, there is still a significant spike (and therefore a significant risk that premature boundary layer transition will be initiated).

It is also necessary that the leading edge should operate efficiently over a range of incidence angles. The incidence angle of the gas impinging on the blade leading edge (the "local incidence") is affected by two principal factors - the blade incidence and the wake incidence. Blade incidence varies between about zero and 3 degrees according to the blade's operating condition.

Wake incidence is a periodic disturbance to the local incidence. Figure 2 shows a single rotor blade 22 and a single stator 24. As the rotor blade 22 rotates with speed U, the stator 24 will, in effect, pass through its wake 26. Within the wake, therefore, the local incidence is affected by the wake incidence (typically by about 18 degrees). Between the wakes 26 of succeeding rotor blades 22, the wake incidence has a reduced effect on the local incidence depending on the wake size and the distance from the wake.

Although the variation in wake incidence is greater than the variation in blade incidence, the blade incidence has the greater influence on the local incidence. This is because the blade lift amplifies blade incidence by a factor of about 5 in the region of the leading edge, but has no effect on the wake incidence.

In general, increased local incidence increases spike height. This makes the leading edge more susceptible to transition, with an increase in the turbulent wetted area and a consequent increase in losses.

With compressor blades, it is particularly difficult to avoid leading edge spikes in use. This is because structural integrity requirements limit the minimum allowable leading edge thickness. Also, the leading edge radii are typically small and therefore manufacturing defects and in-service erosion result in relatively large geometry variations. To ensure that all blades have no spike throughout engine life would therefore be practically very difficult and extremely costly. Thus, if these spikes exist in practice, their detrimental effect on loss must be quantifiable.

Known methods of leading edge design rely on prescribed geometry (e.g. ellipses), or point definition (which lacks control), and cannot produce leading edge designs that avoid spikes in use. Known methods of design do not take full account of the relative importance of the region of the aerofoil nearest to the edge, in comparison to the regions further back, particularly when the edge is not designed to be circular (for example, when it is elliptical).

The invention provides a method for defining the shape of an aerofoil, and the resulting aerofoil, as set out in the claims. The invention provides a leading edge shape for an aerofoil with a higher incidence range than known leading edge designs.

The invention provides a method that combines the strengths of known alternatives, allowing both freedom and control. It provides leading edge designs that overcome, or at least greatly reduce, spikes in use. It has the further benefit that it can be implemented with existing design tools and manufacturing methods.

An embodiment of the invention will now be described, by way of example, with reference to the following drawings:

Figure 3 is a schematic illustration of an initial leading edge profile, and a graph showing its parameterisation;

Figure 4 is a schematic illustration of an optimised leading edge profile and its corresponding parameterisation; and

Figure 5 is a comparison of the spiking associated with the initial and final profiles, for two values of local incidence.

The idealised leading edge is one that achieves minimum design incidence loss while maximising operating incidence range; two design objectives which are often considered as opposed. However, these two design objectives can be achieved if the leading edge spike is removed at both design and high incidence.

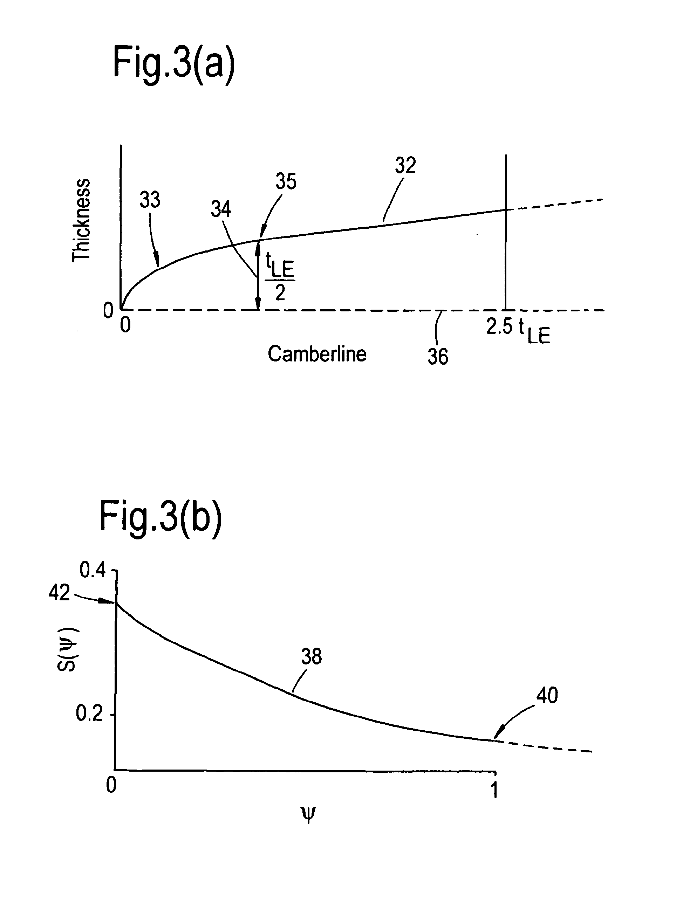

Figure 3 (a) shows the leading edge profile 32 of a compressor rotor aerofoil with a known elliptical leading edge 33, having a 3:1 semi-axis ratio. The leading edge thickness 34, $t_{LE}$, is defined as the thickness of the leading edge at the point 35 where the ellipse joins the blade surface. The camberline 36 is a notional line running along the centre of the blade from the leading to the trailing edge. In this drawing it has been normalised to lie along the X-axis, and thus it appears to be a straight line; in a real blade it may not be a straight line.

In this example, only that part of the blade profile nearest to the leading edge is to be optimised; specifically, the region within $2.5t_{LE}$ of the leading edge, as shown in Figure 3(a).

The leading edge thickness, as shown in Figure 3(a), is first transformed into a new space by normalising both the camberline and the thickness by the value $2.5t_{LE}$. Figure 3(b) shows the result of this transformation, in which

$$\psi = \frac{camberline}{2.5t_{LE}} \quad \text{and} \quad S(\psi) = \frac{thickness}{2.5t_{LE}}$$

The curve 38 characterises the geometry of the leading edge region. Point 40 represents the point at which the leading edge reattaches to the blade surface, and point 42 defines the leading edge radius.

In order to optimise the leading edge design, the curve 38 should be well defined and continuous. In particular, the infinite gradient at ($\psi$ = 0) should be removed, as well as the high curvature over the front of the leading edge.

The function S($\psi$) must therefore be modified. This can be achieved by dividing by a function that has the same qualities. The thickness distribution is divided by two functions, a parabolic function and a linear function. The parabolic dominates close to the leading edge (i.e. close to $\psi$=0), removing the high curvature and the infinite gradient. The linear function ensures that where the leading edge joins the surface of the blade, at $\psi$ = 1, the function remains smooth. In the numerator a linear function is removed from the leading edge. This ensures the function does not go to infinity at $\psi$ = 1. The equation therefore becomes

$$S'(\psi) = \frac{\varsigma(\psi) - \psi\varsigma(1)}{\sqrt{\psi(1-\psi)}}$$

where

$$\psi = \frac{camberline}{2.5t_{LE}} \quad \text{and} \quad \varsigma = \frac{thickness}{2.5t_{LE}}.$$

The transformed space, S', was parameterised using 10th order Bernstein polynomials. The clustering of the polynomials was increased close to the leading edge point for increased resolution in this area. This was achieved by mapping the polynomials onto a circular arc: ($\psi$ = 1 - cos($\theta$)). Theta is defined in the range between 0 and $\pi$/2. The equation for the Bernstein polynomials as a function of $\theta$ is

$$S(\theta) = \sum_{r=0}^{10} c_r \binom{n}{r} \left(\frac{\theta}{\pi/2}\right)^r \left(1 - \left(\frac{\theta}{\pi/2}\right)\right)^{10-r}$$

The design space is spanned by changing the magnitude of the (r+1) parameters, $c_i$ (i = 0:r).

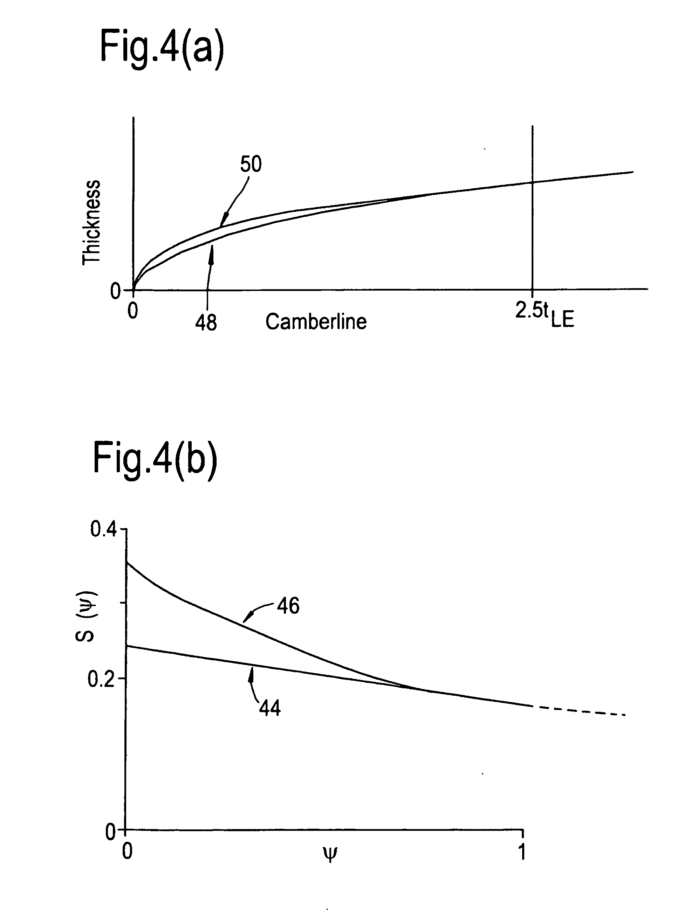

The result of the optimisation is to produce a function that is almost linear in the transformed space. Figure 4(b) shows the optimised function S' (44) together with the original function S (46) for comparison.

By reversing the parameterisation described above, the optimised leading edge shape may be generated, as shown in Figure 4(a). The optimised leading edge shape 48 is shown together with the original leading edge shape 50 for comparison. The optimised leading edge is more slender than an ellipse, but it is still sufficiently robust for use in a gas turbine engine.

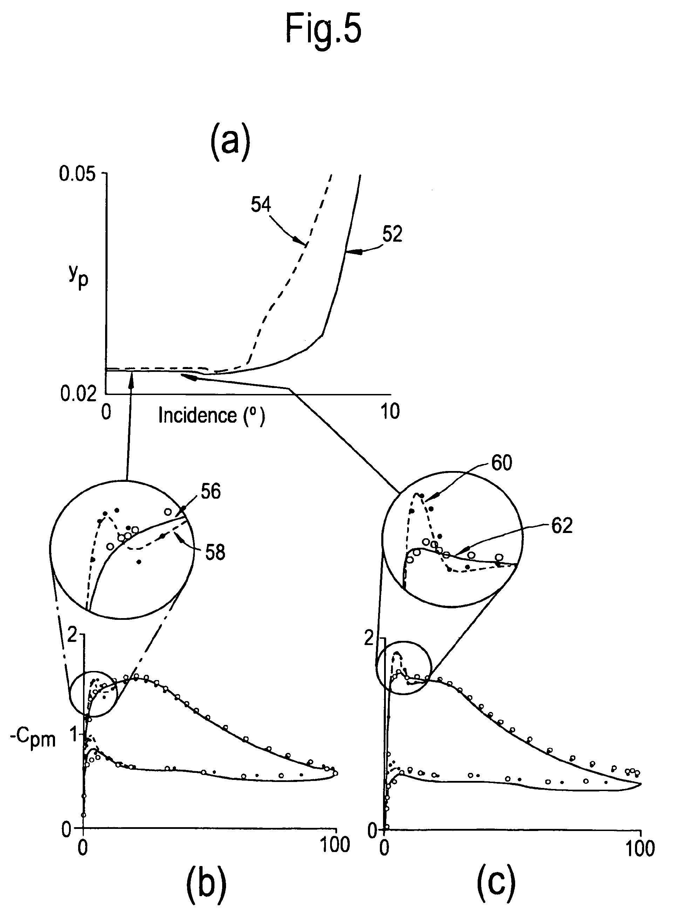

Figure 5 (a) shows the loss loop 52 associated with the optimised leading edge. The corresponding loss loop for the original leading edge is shown by the dashed line 54. Loss $y_p$ is plotted against incidence in degrees. It can be seen that the loss for the optimised leading edge remains low over a considerably wider range of incidence. The reason for this is that the spike is removed over a large incidence range, preventing premature transition at the leading edge. Figure 5(b) shows surface pressure $c_p$ against distance along the suction surface $s/s_0$ for a small value of incidence (about 0.5 degrees). In the enlarged portion of the graph it can be seen that there is no spike in surface pressure for the optimised leading edge 56 whereas the original leading edge displays a prominent spike 58. At the highest operating incidence of the blade the spike is only just beginning to appear. This can be seen in Figure 5(c), for an incidence of about 3 degrees. The original leading edge 60 still shows a distinct spike, whereas the optimised leading edge 62 shows only a very slight overshoot in surface pressure. The increase in usable incidence range for the blade with the optimised leading edge is around 3°.

The invention thus provides a method whereby by parameterising the leading edge surface profile, and modifying the resulting transformed space, an optimised leading edge profile can be defined with minimised leading edge pressure spike over the blade's operating range of incidence. Such leading edges typically have no leading edge spike for incidences up to 4°. This so-called spikeless leading edge is a parabolic function.

In the described embodiment, the leading edge shape is optimised over a distance of $2.5t_{LE}$. In other embodiments of the invention, a different multiplier may be appropriate; for example, where the Reynolds number of the flow is different or where the thickness-to-chord ratio of the aerofoil is different.

Although, in the described embodiment, the transformed space was parameterised using 10th order Bernstein polynomials, it will be appreciated that other polynomials may be used.

Although the described embodiment relates to a leading edge for a compressor aerofoil, the principles of the invention may, as outlined above, be applied equally to the trailing edge of an aerofoil. The invention may equally be applied to stator aerofoils as to rotor aerofoils. The invention is also applicable to aerofoils in different types of machines, and could be applied to hydrofoils.

In the described embodiment, a known elliptical leading edge profile is used as the starting point for the method according to the invention. In fact, any leading edge profile, known or notional, could be used as a starting point. If the starting profile is very far from the optimised shape for the flow conditions under consideration, it may be necessary to repeat the parameterisation and optimisation process, perhaps more than once, until the optimal leading edge profile is achieved.

Testing has also demonstrated that the leading edge shape has an effect on the downstream transition, but the degree of this effect depends upon design and operation.

The new leading edge shape reduces the (audio) noise generated by the aerofoil. This is of particular benefit in unducted or undamped systems.

The insensitivity to inlet angle, and the ability to apply the principles of this invention also to the trailing edge of an aerofoil, is of great benefit in bi-directional turbines or compressors (e.g. Wells turbine, reciprocating column turbine). It may likewise be employed in other components, such as the cooling fins of bi-directional equipment such as a motor / generator or hybrid drive set, where the reduction in noise is advantageous and the increase in efficiency allows the equipment to be contained in a smaller space envelope.

The method could be applied to turbine aerofoils, including steam turbines. The features are particularly useful for high mach number turbines.

This method could be applied to optimise any aerofoil shape, or part aerofoil shape (for example, splitters, struts, fairings, pylons, nacelles, centrifugal or axial compressors or turbines, hollow axis turbines, windmills, wind turbines, propeller blades (ships), water jets, propulsors) running in fluids or gases. The features are of particular use where shocks or gusts are encountered by the aerofoils, such as wind turbines (especially those within the built environment), Wells turbines, bi-directional turbines, and open rotors or propellers.

**Claims**

1. A method for defining the shape of a leading or trailing edge (33) of an aerofoil, **characterised in that** the method comprises the following steps:

   obtaining a starting value for the thickness (34) of the selected edge;
   defining a distance from the selected edge in terms of the thickness;
   over the defined distance, defining a space S in terms of normalised camberline and normalised thickness, where camberline and thickness are normalised with respect to the leading edge thickness;
   transforming the space S to a new space S';
   parameterising the new space S' to obtain new values for normalised camberline and normalised thickness;
   defining a new shape (48) for the selected edge using the new parameter values.

2. A method as claimed in claim 1, in which the transforming step comprises applying a parabolic function to the space S.

3. A method as claimed in claim 1, in which the transforming step comprises applying a function of the

form $S'(\psi) = \dfrac{\varsigma(\psi) - \psi\varsigma(1)}{\sqrt{\psi(1-\psi)}}$ to the space S, where

$$\psi = \frac{camberline}{Kt_{LE}} \text{ and } \varsigma = \frac{thickness}{Kt_{LE}} , \text{ and}$$

where K is a predetermined constant.

**4.** A method as claimed in claim 3, in which the value of K is 2.5.

**5.** A method as claimed in any preceding claim, in which the space S' is parameterised using 10th order Bernstein polynomials.

**6.** A method as claimed in any preceding claim, in which the aerofoil is a compressor blade for a gas turbine engine.

**7.** A method as claimed in any preceding claim, in which the aerofoil is a compressor stator for a gas turbine engine.

**Patentansprüche**

**1.** Verfahren zum Definieren der Form einer Anström- oder Abströmkante (33) eines Flügelprofils, **dadurch gekennzeichnet, dass** das Verfahren die folgenden Schritte umfasst:

Ermitteln eines Ausgangswertes für die Dicke (34) der ausgewählten Kante;
Definieren eines Abstands von der ausgewählten Kante in Bezug auf die Dicke;
über den definierten Abstand Definieren eines Raums S in Bezug auf eine normalisierte Wölbungslinie und eine normalisierte Dicke, wobei die Wölbungslinie und die Dicke in Bezug auf die Dicke der Anströmkante normalisiert sind;
Transformieren des Raums S in einen neuen Raum S';
Parametrisieren des neuen Raums S', um neue Werte für die normalisierte Wölbungslinie und die normalisierte Dicke zu erhalten;
Definieren einer neuen Form (48) für die ausgewählte Kante unter Verwendung des neuen Parameterwerts.

**2.** Verfahren nach Anspruch 1, wobei der Schritt des Transformierens das Anwenden einer parabolischen Funktion auf den Raum S umfasst.

**3.** Verfahren nach Anspruch 1, wobei der Schritt des Transformierens das Anwenden einer Funktion der folgenden Form $S'(\psi) = \frac{S(\psi) - \psi\varsigma(1)}{\sqrt{\psi(1-\psi)}}$ auf den Raum S umfasst, wobei $\psi = \frac{W\ddot{o}lbungslinie}{Kt_{LE}}$ und

$\varsigma = \frac{Dicke}{Kt_{LE}}$ gelten, und wobei K eine vorbestimmte Konstante ist.

**4.** Verfahren nach Anspruch 3, wobei der Wert von K 2,5 beträgt.

**5.** Verfahren nach einem der vorstehenden Ansprüche, wobei der Raum S' unter Verwendung von Bernstein-Polynomen der 10. Ordnung parametrisiert wird.

**6.** Verfahren nach einem der vorstehenden Ansprüche, wobei das Flügelprofil eine Verdichterschaufel für einen Gasturbinenmotor ist.

**7.** Verfahren nach einem der vorstehenden Ansprüche, wobei das Flügelprofil eine Verdichterleitschaufel für einen Gasturbinenmotor ist.

**Revendications**

**1.** Procédé destiné à définir la forme d'un bord d'attaque ou de fuite (33) d'un profil aérodynamique, **caractérisé en ce que** le procédé comprend les étapes consistant à :

obtenir une valeur initiale pour l'épaisseur (34) du bord sélectionné ;
définir une distance à partir du bord sélectionné en termes d'épaisseur ;
sur la distance définie, définir un espace S en termes de cambrure normalisée et d'épaisseur normalisée, la cambrure et l'épaisseur étant normalisées par rapport à l'épaisseur du bord d'attaque ;
transformer l'espace S en un nouvel espace S' ;
paramétrer le nouvel espace S' pour obtenir de nouvelles valeurs pour la cambrure normalisée et l'épaisseur normalisée ;
définir une nouvelle forme (48) pour le bord sélectionné à l'aide des nouvelles valeurs de paramètre.

**2.** Procédé selon la revendication 1, la transformation comprenant l'étape consistant à appliquer une fonction parabolique à l'espace S.

**3.** Procédé selon la revendication 1, la transformation comprenant l'étape consistant à appliquer une fonction de la forme $S'(\psi) = \frac{\varsigma(\psi) - \psi\varsigma(1)}{\sqrt{\psi(1-\psi)}}$ à l'espace S, où $\psi = \frac{camberline}{Kt_{LE}}$ et $\varsigma = \frac{thickness}{Kt_{LE}}$ ,

**EP 2 350 439 B1**

et où K est une constante prédéterminée.

4. Procédé selon la revendication 3, la valeur de K étant 2,5.

5. Procédé selon l'une quelconque des revendications précédentes, l'espace S' étant paramétré à l'aide de polynômes de Bernstein d'ordre 10.

6. Procédé selon l'une quelconque des revendications précédentes, le profil aérodynamique étant une aube mobile pour une turbine à gaz.

7. Procédé selon l'une quelconque des revendications précédentes, le profil aérodynamique étant un stator pour une turbine à gaz.

Fig.1

Fig.2

## Fig.3(a)

## Fig.3(b)

## Fig.4(a)

## Fig.4(b)

# Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030194327 A1

- EP 704602 A2